# EUROPEAN PATENT SPECIFICATION

(11) **EP 1 531 106 B1**
(45) Date of publication and mention of the grant of the patent: **27.02.2008**
(21) Application number: 04256598.6
(22) Date of filing: 26.10.2004
(51) Int. Cl.: B60T 8/36, B29C 45/00

(54) **Hydraulic unit of anti-lock brake system and method of manufacturing the same**
Hydraulikaggregrat einer blockiergeschützten Fahrzeugbremsanlage und Verfahren zur dessen Herstellung
Unité hydraulique d'un système de freinage antiblocage et procédé de sa fabrication

(30) Priority: 14.11.2003 KR 2003080666
(43) Date of publication of application: 18.05.2005
(73) Proprietor: Mando Corporation, Pyungtaek-City, Kyungki-Do (KR)
(72) Inventor: Yang, I-Jin, Pyungteak-City, Kyonggi-Do (KR); Ha, Dong-Hun, Pyungteak-City, Kyonggi-Do (KR)
(74) Representative: Pratt, David Martin

(56) References cited:
- WO-A-00/78585
- WO-A-01/32486
- WO-A-99/44872
- US-A- 3 360 008
- US-A- 5 226 450
- US-A- 5 281 013
- US-A1- 2002 124 891

## Description

The present invention relates to a hydraulic unit for an anti-lock brake system for vehicles, and more particularly to a hydraulic unit for an anti-lock brake system that is manufactured by injection moulding of a resin material. Also, the present invention relates to a method of manufacturing the same.

An anti-lock brake system mounted in a vehicle is a system that controls braking oil pressure applied to wheel cylinders of wheels of the vehicle such that the braking oil pressure is decreased or increased when the vehicle is braked. The wheels of the vehicle are not fully locked by means of the anti-lock brake system, whereby the vehicle is stopped within the shortest distance possible while the steering performance of the vehicle is maintained. Such an anti-lock brake system further comprises a hydraulic unit that controls braking oil pressure, an electronic control unit that controls the hydraulic unit, and wheel sensors that sense velocities of the respective wheels of the vehicle, in addition to a servomechanism, a master cylinder, and wheel cylinders of a common brake system for vehicles.

The hydraulic unit of the anti-lock brake system decreases, maintains, or increases braking oil pressures applied to the wheels of the vehicle to control the braking force. One example of a hydraulic unit for an anti-lock brake system is disclosed in U.S. patent specification No. 5,577,813 wherein the hydraulic unit of the anti-lock brake system comprises a block-type housing having a plurality of flow channels formed therein, a plurality of valves mounted to the housing for opening/closing the flow channels, a pump that pressurises a fluid, and low-pressure and high-pressure accumulators that accumulate the fluid.

US patent specification No. 5,281,013 and WO 99/44872 describe other known hydraulic devices for braking the wheels of a vehicle made of plastic.

To manufacture the conventional hydraulic unit as described above, a metal material, such as aluminum, is cut to obtain a hexahedral housing, and then the housing is also cut to form a plurality of bores and a plurality of inner flow channels in the housing. In the block-type housing manufactured as described above are mounted a plurality of valves, a pump, and low-pressure and high-pressure accumulators. In this way, the hydraulic unit is manufactured.

In the conventional hydraulic unit of the anti-lock brake system, however, the aluminum housing is manufactured through a step of cutting the housing such that the surface of the housing is flat, another cutting step of forming bores, in which a plurality of components are mounted in the housing, and yet another cutting step of forming inner flow channels in the housing. It is necessary that high-accuracy cutting operations be carried out at the respective cutting steps. As a result, the manufacturing process of the housing is very complicated and troublesome. Furthermore, the manufacturing costs of the housing are very high, since the housing is made of aluminum.

An aim of the invention to provide a hydraulic unit for an anti-lock brake system for vehicles having a housing that is easily manufactured, whereby production efficiency is improved, and thus the manufacturing costs of the housing are reduced.

It is another aim of the invention to provide a method of manufacturing the same.

In accordance with one aspect, the present invention provides a hydraulic unit of an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein reinforcing parts are provided at the outer surfaces of the components at positions where the components are mounted to the housing to form integral units with the components, the reinforcing parts being formed through injection moulding of a resin material, and the housing is provided with a plurality of bores corresponding to the reinforcing parts of the components, the bores being formed through injection moulding of a resin material, the reinforcing parts of the components being fitted in the bores, respectively.

In accordance with another aspect, the present invention provides a method of manufacturing a hydraulic unit of an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein the method comprises: a reinforcing part manufacturing step of manufacturing reinforcing parts to be fitted on the outer surfaces of the components through injection moulding; a housing manufacturing step of manufacturing a housing provided with a plurality of bores having a size corresponding to that of the reinforcing parts through injection moulding using a mould; and a component mounting step of mounting components with the reinforcing parts to the housing; characterized in that: each reinforcing part is fitted onto the outer surface of the respective component to form an integral unit prior to mounting of the reinforcing part of that unit in the associated bore.

Preferably, the reinforcing part manufacturing step is carried out such that the reinforcing parts are formed while the components are placed in moulds used to form the reinforcing parts, whereby the reinforcing parts are formed integrally with the components, respectively.

Preferably, the reinforcing part manufacturing step comprises the sub-steps of: separately forming the reinforcing parts using moulds; and fitting the reinforcing parts on the outer surfaces of the components, respectively.

Preferably, the housing manufacturing step is carried out such that the bores and the flow channels are simultaneously formed.

Preferably, the component mounting step is carried out such that bonding agents are applied to the outer surfaces of the reinforcing parts, and then the reinforcing parts are forcibly fitted into the bores of the housing, respectively.

Preferably, the reinforcing part manufacturing step comprises the sub-steps of: forming thread parts at the outer surfaces of the reinforcing parts, and the housing manufacturing step comprises the sub-steps of: forming thread parts at the inner surfaces of the bores of the housing, the thread parts of the bores of the housing corresponding to those of the reinforcing parts, whereby the reinforcing parts are fitted into the bores of the housing by the thread engagement between the reinforcing parts and the bores of the housing.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the drawings, in which:
FIG. 1 is a view showing a hydraulic circuit of an anti-lock brake system constructed according to the present invention;
FIG. 2 is an exploded perspective view showing the structure of a hydraulic unit forming part of the anti-lock brake system shown in FIG. 1;
FIG. 3 is a perspective view showing bores and flow channels formed in a housing of the hydraulic unit of FIG. 2;
FIG. 4 is a sectional view taken along line IV-IV' of FIG. 2;
FIG. 5 is a flow chart illustrating a manufacturing process of the hydraulic unit of FIG. 2; and
FIG. 6 is a flow chart illustrating a manufacturing process of a modified form of hydraulic unit of an anti-lock brake system according to another preferred embodiment of the present invention.

Reference will now be made in detail to the embodiment of the present invention, examples of which are illustrated in the accompanying drawings, wherein like reference numerals refer to like elements throughout. The embodiment is described below to explain the present invention by referring to the figures.

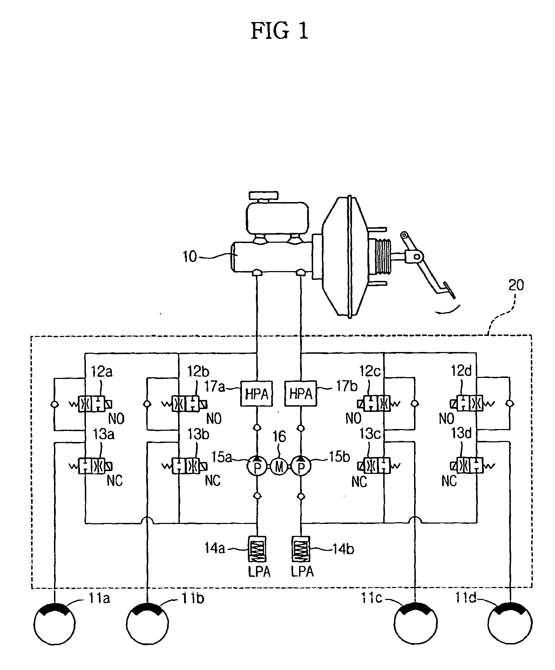

FIG. 1 is a view showing a hydraulic circuit of an anti-lock brake system constructed according to the present invention. As is shown in FIG. 1, the anti-lock brake system comprises: a plurality of valves 12a, 12b, 12c, 12d, 13a, 13b, 13c, and 13d that intermittently control transmission of braking oil pressure created in a master cylinder 10 to wheel cylinders 11a, 11b, 11c, and 11d mounted to front and rear wheels of the vehicle, respectively; and two low-pressure accumulators 14a and 14b that accumulate oil returned from the wheel cylinders 11a, 11b, 11c, and 11d. The anti-lock brake system further comprises: two hydraulic pumps 15a and 15b that pressurise oil accumulated in the low-pressure accumulators 14a and 14b; a motor 16 that operates the hydraulic pumps 15a and 15b; and two high-pressure accumulators 17a and 17b that accumulate oil discharged from the hydraulic pumps 15a and 15b to decrease pressure pulsation.

The valves in the hydraulic circuit of FIG. 1 comprise: normally open valves 12a, 12b, 12c, and 12d, which are disposed upstream of flow channels connected to the wheel cylinders 11a, 11b, 11c, and 11d of the wheels, respectively, the normally open valves 12a, 12b, 12c, and 12d being normally open; and normally closed valves 13a, 13b, 13c, and 13d, which are disposed downstream of flow channels connected to the wheel cylinders 11a, 11b, 11c, and 11d of the wheels, respectively, the normally closed valves 13a, 13b, 13c, and 13d being normally closed. The two hydraulic pumps 15a and 15b are common piston-type pumps, which are operated by means of the motor 16. The two low-pressure accumulators 14a and 14b are disposed at the flow channels at the inlet sides of the hydraulic pumps 15a and 15b for accumulating oil returned from the normally closed valves 13a, 13b, 13c, and 13d and supplying the accumulated oil to the inlets of the hydraulic pumps 15a and 15b. The two high-pressure accumulators 17a and 17b are disposed at the flow channels at the outlet sides of the hydraulic pumps 15a and 15b for accumulating oil discharged from the hydraulic pumps 15a and 15b to decrease pressure pulsations caused by the operation of the hydraulic pumps 15a and 15b. The operation of the motor 16, that drives the valves 12a, 12b, 12c, 12d, 13a, 13b, 13c, and 13d, and the hydraulic pumps 15a and 15b, is controlled by means of an electronic control unit (not shown) such that the braking oil pressures transmitted to the wheel cylinders of the wheels are controlled.

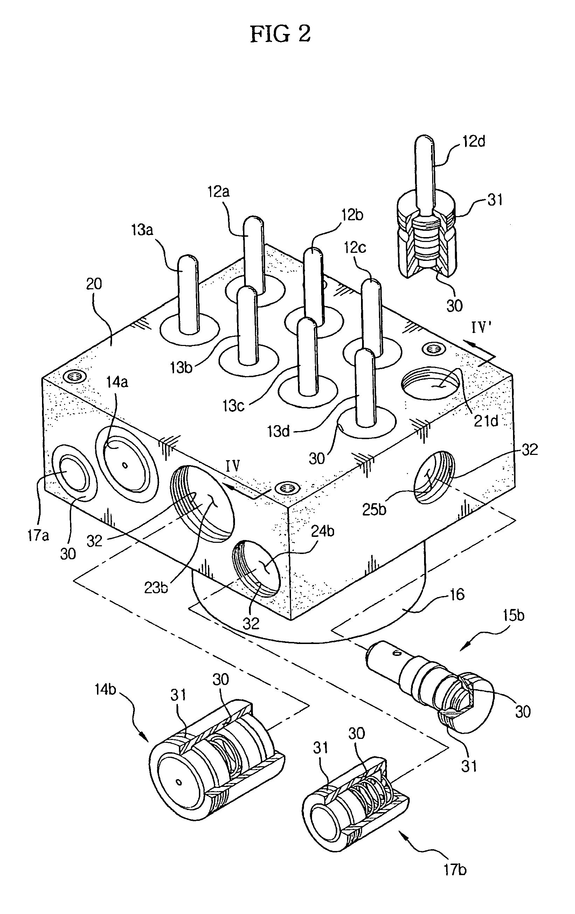

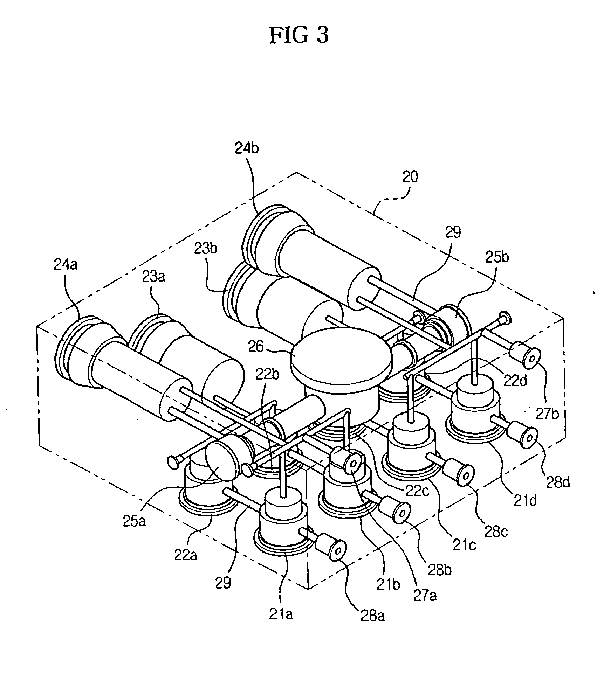

In the anti-lock brake system described above, the valves 12a, 12b, 12c, 12d, 13a, 13b, 13c, and 13d, the low-pressure and high-pressure accumulators 14a, 14b, 17a, and 17b, and the hydraulic pumps 15a and 15b are mounted to a hexahedral housing 20 as is shown in FIG. 2 to form a hydraulic unit. As is shown in FIG. 3, the housing 20 of the hydraulic unit is provided with bores 21a, 21b, 21c, 21d, 22a, 22b, 22c, and 22d, in which the valves 12a, 12b, 12c, 12d, 13a, 13b, 13c, and 13d are fitted, respectively, bores 23a, 23b, 24a, and 24b, in which the low-pressure and high-pressure accumulators 14a, 14b, 17a, and 17b are fitted, respectively, bores 25a, 25b, and 26, in which the hydraulic pumps 15a and 15b, and the motor 16 that drives the hydraulic pumps 15a and 15b are fitted, respectively, and a plurality of pipe-connecting parts 27a, 27b, 28a, 28b, 28c, and 28d. A plurality of flow channels 29 are formed in the housing 20, the flow channels being connected between the components mounted to the housing 20 and the pipe-connecting parts 27a, 27b, 28a, 28b, 28c and 28d. In this way, the hydraulic unit as is shown in FIG. 1 is accomplished.

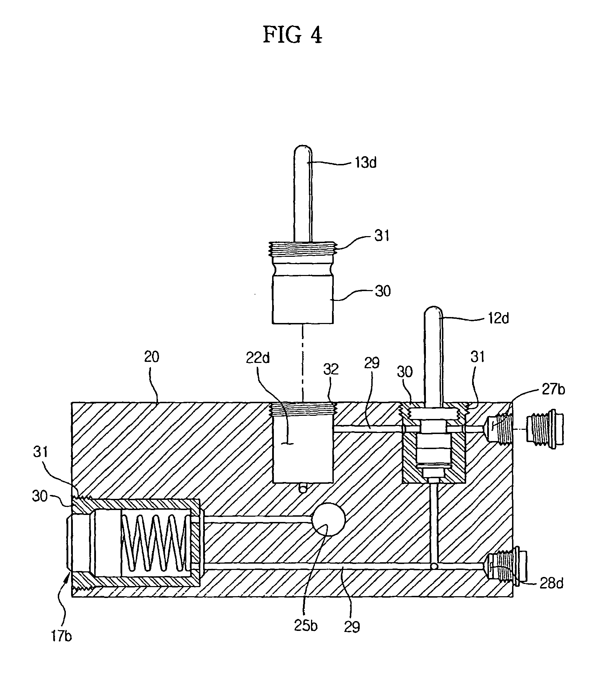

The housing 20 of the hydraulic unit is manufactured by injection moulding of a resin material. Consequently, the housing 20 is easily manufactured. As is shown in FIGS. 2 and 4, reinforcing parts 30 having a predetermined thicknesses are provided at the outer surfaces of the components mounted to the housing 20. The reinforcing parts 30 are formed by injection moulding. The housing 20 is provided with a plurality of bores having sizes corresponding to those of the reinforcing parts 30, such that the reinforcing parts 30 provided at the components are mounted to the housing 20 in a cartridge-coupling fashion. Specifically, the reinforcing parts 30 are provided at the outer surfaces of the components mounted to the housing 20, and the reinforcing parts 30 are mounted to the housing 20. In this way, the bores of the housing 20 have a simplified shape, and thus the housing 20 is more easily manufactured through injection moulding of a resin material. Also, the reinforcing parts 30 are provided at the outer surfaces of the components, whereby the components can be easily mounted to the housing 20, the strength of the positions where the components are mounted is increased, and airtightness at the positions where the components are mounted is maintained.

Now, a method of manufacturing the hydraulic unit of the anti-lock brake system with the above-stated construction according to the present invention will be described.

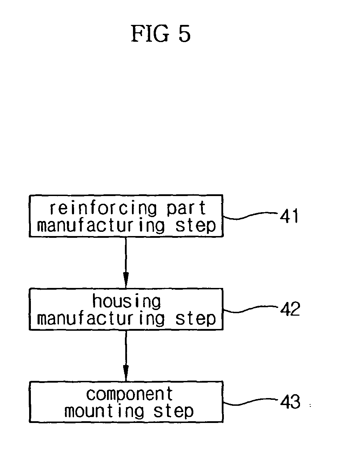

As is shown in FIG. 5, the method of manufacturing the hydraulic unit begins with step S41 of manufacturing the reinforcing parts 30, which are attached to the outer surfaces of the previously-prepared components, such as the valves 12a, 12b, 12c, 12d, 13a, 13b, 13c, and 13d, the low-pressure and high-pressure accumulators 14a, 14b, 17a, and 17b, and the pumps 15a and 15b. The forming of the reinforcing parts 30 is carried out after the previously-prepared components are placed in moulds (not shown) that are used to form the reinforcing parts 30. In this way, the reinforcing parts 30 are formed integrally with the outer surfaces of the components as is shown in FIG. 2. Consequently, the reinforcing parts 30 are securely attached to the outer surfaces of the components while airtightness and watertightness between the reinforcing parts and the corresponding components are maintained although the outer shapes of the components are complicated. Preferably, the outer surfaces of the reinforcing parts 30 are formed in the shape of simple cylinders.

Subsequently, step S42 of forming a resin housing 20 through injection moulding of a resin material is carried out, in addition to the reinforcing part manufacturing step S41. Specifically, molten resin is injected into a mould (not shown) that is used to form the housing 20. After the resin housing forming step S42 is carried out, the plurality of bores, in which the reinforcing parts 30 of the components will be fitted, are formed at the housing 20 by means of a plurality of cores (not shown) provided in the mould. Also, the flow channels 29 are formed in the housing 20 by means of flow channel-forming pins (not shown) disposed in the mould. At this time, the shape of the bores formed at the housing 20 is simplified corresponding to that of the reinforcing parts 30 provided at the outer surfaces of the components. Consequently, the housing 20 is easily formed.

Following the reinforcing part manufacturing step S41 and the resin housing forming step S42, step S43 of fitting the reinforcing parts 30 of the components into the bores of the housing 20 is carried out. The reinforcing parts 30 are forcibly fitted into the bores of the housing 20, while strong bonding agents are applied to the outer surfaces of the reinforcing parts 30 and the inner surfaces of the bores of the housing 20. Alternatively, the reinforcing parts 30 may be provided at the outer surfaces thereof with thread parts 31, and the bores of the housing 20 are provided at the inner surfaces thereof with thread parts 32 corresponding to the thread parts 31, as is shown in FIGS. 2 and 4, such that the reinforcing parts are fitted into the bores of the housing 20 by the thread engagement between the reinforcing parts 30 and the bores of the housing 20. In this case, the thread parts 31 and 32 are previously formed at the reinforcing part manufacturing step S41 and the resin housing forming step S42.

As described above, the housing 20 of the hydraulic unit is manufactured by injection moulding. Consequently, the method of manufacturing the housing 20 of the hydraulic unit increases productivity and decreases the manufacturing costs as compared to the conventional method of manufacturing the housing through the aluminum cutting process. Also, the reinforcing parts 30 are provided at the outer surfaces of the components to be mounted to the housing 20, and the reinforcing parts 30 are fitted in the bores of the housing 20. Consequently, the shape of the bores of the housing 20 is simplified with the result that the housing 20 is more easily manufactured, and components are easily mounted to the housing 20.

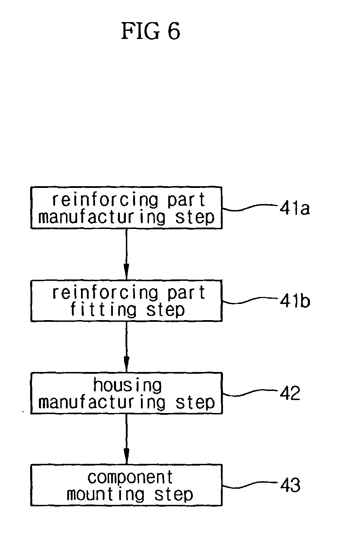

FIG. 6 is a flow chart illustrating a manufacturing process of a hydraulic unit of an anti-lock brake system according to another preferred embodiment of the present invention. This embodiment is identical to the previous embodiment shown in FIG. 5 except that the reinforcing parts 30 are separately formed and then attached to the outer surfaces of the components. Specifically, a reinforcing part manufacturing step S41a of manufacturing the reinforcing parts 30 through injection moulding using moulds used to form the reinforcing parts 30 is carried out, and then a reinforcing part attaching step 41b of attaching the reinforcing parts 30, which are manufactured at the reinforcing part manufacturing step S41a, on the outer surfaces of the components by forcible fitting or bonding agents is carried out. Other manufacturing steps of this embodiment are identical to those of the previous embodiment shown in FIG. 5, the description of which will not be given accordingly.

As apparent from the above description, the present invention provides a hydraulic unit for an anti-lock brake system for vehicles having a housing that is easily manufactured through injection moulding of a resin material. Specifically, the housing is formed in a desired shape by carrying out the injection moulding only once. Consequently, the present invention has the effect that the housing is easily manufactured with increased productivity as compared with the conventional method of manufacturing the housing through an aluminum cutting process.

Also, the reinforcing parts, which are previously prepared through injection moulding, are attached to the outer surfaces of the components, which will be mounted to the housing, and the reinforcing parts are fitted in the bores of the housing. Consequently, the shape of the bores of the housing is simplified with the result that the housing can be easily formed, and the components can be easily mounted to the housing.

Furthermore, the housing is manufactured through injection moulding of a resin material. Consequently, the manufacturing costs of the housing are considerably decreased as compared to the conventional hydraulic unit.

Although embodiments of the present invention have been shown and described, it would be appreciated by those skilled in the art that changes may be made in this embodiment without departing from the principles of the invention, the scope of which is defined in the claims.

## Claims

1. A hydraulic unit for an anti-lock brake system, the hydraulic unit comprising a housing (20) having components that control braking oil pressure supplied to wheels of a vehicle, such as a plurality of valves(12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein
reinforcing parts (30) are provided at the outer surfaces of the components at positions where the components are mounted to the housing to form integral units with the components, the reinforcing parts being formed through injection moulding of a resin material, and
the housing is provided with a plurality of bores corresponding to the reinforcing parts of the components, the bores being formed through injection moulding of a resin material, the reinforcing parts of the components being fitted in the bores, respectively.

2. A method of manufacturing a hydraulic unit of an anti-lock brake system, the hydraulic unit comprising a housing (20) having components that control braking oil pressure supplied to wheels of a vehicle, such as a plurality of valves (12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein the method comprises:
a reinforcing part manufacturing step of manufacturing reinforcing parts (30) to be fitted on the outer surfaces of the components through injection moulding;
a housing manufacturing step of manufacturing a housing provided with a plurality of bores having a size corresponding to that of the reinforcing parts through injection moulding using a mould; and
a component mounting step of mounting components with the reinforcing parts to the housing; **characterized in that**:
each reinforcing part is fitted onto the outer surface of the respective component to form an integral unit prior to mounting of the reinforcing part of that unit in the associated bore.

3. A method according to claim 2, wherein the reinforcing part manufacturing step is carried out such that the reinforcing parts (30) are formed while the components are placed in moulds used to form the reinforcing parts, whereby the reinforcing parts are formed integrally with the components, respectively.

4. A method according to claim 2, wherein the reinforcing part manufacturing step comprises the sub-steps of:
separately forming the reinforcing parts (30) using moulds; and
fitting the reinforcing parts on the outer surfaces of the components, respectively.

5. A method according to any one of claims 2 to 4, wherein the housing manufacturing step is carried out such that the bores and the flow channels are simultaneously formed.

6. A method according to any one of claims 2 to 5, wherein the component mounting step is carried out such that bonding agents are applied to the outer surfaces of the reinforcing parts (30), and then the reinforcing parts are forcibly fitted into the bores of the housing (20), respectively.

7. A method according to any one of claims 2 to 6, wherein the reinforcing part manufacturing step comprises the sub-steps of: forming thread parts at the outer surfaces of the reinforcing parts (30), and the housing manufacturing step comprises the sub-steps of: forming thread parts at the inner surfaces of the bores of the housing (20), the thread parts of the bores of the housing corresponding to those of the reinforcing parts, whereby the reinforcing parts are fitted into the bores of the housing by the thread engagement between the reinforcing parts and the bores of the housing.

## Patentansprüche

1. Hydraulikaggregat für eine blockiergeschützte Bremsanlage, wobei das Hydraulikaggregat ein Gehäuse (20), das Komponenten aufweist, die den auf die Räder eines Fahrzeugs zugeführten Druck der Bremsflüssigkeit steuern, wie eine Vielzahl von Ventilen (12a, 12b, 12c, 12d, 13a, 13b, 13c, 13d), Akkumulatoren (14a, 14b, 17a, 17b) und daran angebrachte Hydraulikpumpen (15a, 15b), in dem Gehäuse gebildete Durchflusskanäle (29), die zwischen den Komponenten verbunden sind, sowie eine Vielzahl von in dem Gehäuse miteinander verbundenen Rohrleitungen umfasst, wobei
Verstärkungselemente (30) an den äußeren Oberflächen der Komponenten an Positionen vorgesehen sind, an denen die Komponenten an das Gehäuse montiert sind, um einstückige Einheiten mit den Komponenten zu bilden, wobei die Verstärkungselemente durch Spritzgießen eines Harzmaterials gebildet werden, und
das Gehäuse mit einer Vielzahl von Bohrungen versehen ist, die den Verstärkungselementen der Komponenten entsprechen, wobei die Bohrungen durch Spritzgießen eines Harzmaterials gebildet werden, wobei die Verstärkungselemente der Komponenten in die jeweiligen Bohrungen eingefügt werden.

2. Verfahren zur Herstellung eines Hydraulikaggregats einer blockiergeschützten Bremsanlage, wobei das Hydraulikaggregat ein Gehäuse (20) umfasst, das Komponenten aufweist, die den auf die Räder eines Fahrzeugs zugeführten Druck der Bremsflüssigkeit steuern, wie eine Vielzahl von Ventilen (12a, 12b, 12c, 12d, 13a, 13b, 13c, 13d), Akkumulatoren (14a, 14b, 17a, 17b) und daran angebrachte Hydraulikpumpen (15a, 15b), in dem Gehäuse gebildete Durchflusskanäle (29), die zwischen den Komponenten verbunden sind, sowie eine Vielzahl von in dem Gehäuse miteinander verbundenen Rohrleitungen umfasst, wobei das Verfahren umfasst:
einen Schritt der Verstärkungselementherstellung (30) zur Herstellung von Verstärkungselementen, die durch Spritzgießen an den äußeren Oberflächen der Komponenten befestigt werden;
einen Schritt der Gehäuseherstellung zur Herstellung eines Gehäuses durch Spritzgießen unter Verwendung einer Gussform, wobei das Gehäuse mit einer Vielzahl von Bohrungen versehen ist, deren Größe der Größe der Verstärkungselemente entspricht; und
einen Schritt der Komponentenmontage zur Montage von Komponenten mit den Verstärkungselementen an dem Gehäuse; **dadurch gekennzeichnet, dass**:
jedes Verstärkungselement an der äußeren Oberfläche der jeweiligen Komponente befestigt wird, um eine einstückige Einheit zu bilden, bevor das Verstärkungselement dieser Einheit in der zugehörigen Bohrung montiert wird.

3. Verfahren nach Anspruch 2, wobei der Schritt der Verstärkungselementherstellung so ausgeführt wird, dass die Verstärkungselemente (30) gebildet werden, während die Komponenten in Gussformen gesetzt werden, die zur Bildung der Verstärkungselemente verwendet werden, wobei die Verstärkungselemente einstückig mit den jeweiligen Komponenten gebildet werden.

4. Verfahren nach Anspruch 2, wobei der Schritt der Verstärkungselementherstellung die folgenden Unterschritte umfasst:
das gesonderte Bilden der Verstärkungselemente (30) unter Verwendung von Gussformen; und
das Anbringen der Verstärkungselemente an den äußeren Oberflächen der jeweiligen Komponenten.

5. Verfahren nach einem der Ansprüche 2 bis 4, wobei der Schritt der Gehäuseherstellung so ausgeführt wird, dass die Bohrungen und die Durchflusskanäle gleichzeitig gebildet werden.

6. Verfahren nach einem der Ansprüche 2 bis 5, wobei der Schritt der Komponentenmontage so ausgeführt wird, dass Klebemittel auf die äußeren Oberflächen der Verstärkungselemente (30) aufgetragen werden und die Verstärkungselemente anschließend unter Aufwendung von Kraft in die jeweiligen Bohrungen des Gehäuses (20) eingefügt werden.

7. Verfahren nach einem der Ansprüche 2 bis 6, wobei der Schritt der Verstärkungselementherstellung die folgenden Unterschritte umfasst: das Bilden von Gewindeelementen an den äußeren Oberflächen der Verstärkungselemente (30), und der Schritt der Gehäuseherstellung die folgenden Unterschritte umfasst: das Bilden von Gewindeelementen an den inneren Oberflächen der Bohrungen des Gehäuses (20), wobei die Gewindeelemente der Bohrungen des Gehäuses denen der Verstärkungselemente entsprechen, wodurch die Verstärkungselemente durch das Ineinandergreifen der Gewindeelemente zwischen den Verstärkungselementen und den Bohrungen des Gehäuses in die Bohrungen des Gehäuses eingefügt werden.

## Revendications

1. Unité hydraulique pour un système de freinage antiblocage, l'unité hydraulique comprenant un boîtier (20) doté de composants qui régulent la pression de liquide de freinage alimentant les roues d'un véhicule, tels qu'une pluralité de valves (12a, 12b, 12c, 12d, 13a, 13b, 13c, 13d), des accumulateurs (14a, 14b, 17c, 17b) et des pompes hydrauliques (15a, 15b) qui s'y trouvent montés, des canaux d'écoulement (29) formés dans le boîtier, les canaux d'écoulement étant connectés entre les composants, et une pluralité de tubulures connectées les unes aux autres dans le boîtier, dans lequel:
des parties de renfort (30) sont disposées sur les surfaces extérieures des composants aux positions où les composants sont montés sur le boîtier pour former des unités intégrales avec les composants, les parties de renfort étant formées par moulage par injection d'un matériau de résine, et
le boîtier est doté d'une pluralité d'alésages correspondant aux parties de renfort des composants, les alésages étant formés par moulage par injection d'un matériau de résine, les parties de renfort des composants étant montées dans les alésages, respectivement.

2. Procédé de fabrication d'une unité hydraulique d'un système de freinage antiblocage, l'unité hydraulique comprenant un boîtier (20) doté de composants qui régulent la pression de liquide de freinage alimentant les roues d'un véhicule, tels qu'une pluralité de valves (12a, 12b, 12c, 12d, 13a, 13b, 13c, 13d), des accumulateurs (14a, 14b, 17c, 17b) et des pompes hydrauliques (15a, 15b) qui s'y trouvent montés, des canaux d'écoulement (29) formés dans le boîtier, les canaux d'écoulement étant connectés entre les composants, et une pluralité de tubulures connectées les unes aux autres dans le boîtier, dans lequel le procédé comprend :
une étape de fabrication de partie de renfort pour fabriquer les parties de renfort (30) pour être montées sur les surfaces extérieures des composants par moulage par injection ;
une étape de fabrication de boîtier pour fabriquer un boîtier doté d'une pluralité d'alésages ayant une taille correspondant à celle des parties de renfort par moulage par injection en utilisant un moule ; et
une étape de montage de composant pour le montage de composants avec les parties de renfort sur le boîtier ;
**caractérisée en ce que**:
chaque partie de renfort est montée sur la surface extérieure du composant respectif pour former une unité intégrale avant montage de la partie de renfort de cette unité dans l'alésage associé.

3. Procédé selon la revendication 2, dans lequel l'étape de fabrication de la partie de renfort est réalisée de telle façon que les parties de renfort (30) sont formées alors que les composants sont placés dans des moules utilisés pour former les parties de renfort, ce par quoi les parties de renfort sont formées intégralement avec les composants, respectivement.

4. Procédé selon la revendication 2, dans lequel l'étape de fabrication de la partie de renfort comprend les sous-étapes consistant:
à former séparément les parties de renfort (30) en utilisant des moules ; et
à monter les parties de renfort sur les surfaces extérieures des composants, respectivement.

5. Procédé selon l'une des revendications 2 à 4, dans lequel l'étape de fabrication du boîtier est réalisée de telle sorte que les alésages et les canaux d'écoulement sont formés simultanément.

6. Procédé selon l'une des revendications 2 à 5, dans lequel l'étape de montage de composant est réalisée de façon que des agents de liaison sont appliqués sur les surfaces extérieures des parties de renfort (30) et que les parties de renfort sont montées à force dans les alésages du boîtier (20), respectivement.

7. Procédé selon l'une des revendications 2 à 6, dans lequel l'étape de fabrication de la partie de renfort comprend les sous-étapes consistant à : former des parties de vissage filetées sur les surfaces extérieures des parties de renfort (30), et où l'étape de fabrication du boîtier comprend les sous-étapes consistant à : former des parties de vissage filetées sur les surfaces intérieures des alésages du boîtier (20), les parties de vissage filetées des alésages du boîtier correspondant à celles des parties de renfort, ce par quoi les parties de renfort sont montées dans les alésages du boîtier par l'engagement fileté entre les parties de renfort et les alésages du boîtier.
